# EUROPÄISCHE PATENTANMELDUNG

(11) **EP 2 147 877 A1**
(43) Veröffentlichungstag der Anmeldung: **27.01.2010**
(21) Anmeldenummer: 09405120.8
(22) Anmeldetag: 22.07.2009
(51) Int. Cl.: B65G 57/03, B65G 61/00

(54) **Palettiervorrichtung und Verarbeitungssystem mit einer solchen Vorrichtung**

(30) Priorität: 24.07.2008 CH 11552008
(71) Anmelder: Ferag AG, 8340 Hinwil (CH)
(72) Erfinder: Müller, Holger, 04425 Taucha (DE)
(74) Vertreter: Frei Patent Attorneys

(57) **Zusammenfassung**

Die Erfindung betrifft eine Palettiervorrichtung (10) zum Transport von Einheiten (1) von Druckereiprodukten, die durch Umreifung zusammengehalten sind, insbesondere von aus stehend aneinandergereihten Druckereiprodukten gebildeten Stangen oder Paketen aus liegend aufeinandergelegten Druckereiprodukten. Die Palettiervorrichtung (10) umfasst eine Tragkonstruktion (11) mit wenigstens einem vertikal und horizontal verfahrbaren Halteelement (14), das wenigstens eine Druckereiprodukte-Einheit (1) aus der Zwischenablage (50) zu entnehmen und zur Palettierposition (72) zu transportieren imstande ist. Die Tragkonstruktion (11) ist in der Aufsicht von oben auf die Arbeitsgrundfläche (20) im wesentlichen innerhalb der Arbeitsgrundfläche (20) und/oder in einem ersten Seitenbereich (30) ausserhalb der Arbeitsgrundfläche (20) angeordnet, wobei wenigstens ein zweiter Seitenbereich (40) der Arbeitsgrundfläche (20) von der Tragkonstruktion (11) frei ist. Durch diese einseitige Abstützung und Lagerung der Halteelemente (14) wird ein unbehinderter Zugang zur der Arbeitsgrundfläche (20) von der anderen Seite her ermöglicht. Dies hat Vorteile bei der Wartung sowie für den Zu- und Abtransport unbeladener und beladener Paletten.

## Beschreibung

Die Erfindung liegt auf dem Gebiet der Verarbeitung und Förderung von Druckereiprodukten, insbesondere von Druckereiprodukte-Einheiten, die durch Umreifung zu einem weitgehend stabilen Gebilde zusammengefasst sind. Solche Einheiten sind z.B. Stangen, die aus stehend aneinandergereihten Druckereiprodukten gebildet sind, oder Pakete, die aus stapelförmig aufeinandergelegten Druckereiprodukten bestehen. Die Erfindung betrifft eine Palettiervorrichtung zum Transport solcher Einheiten vom Ausgang beispielsweise einer Stangenbildungseinrichtung zu einer Palette, auf der sie neben- und aufeinander zwecks Weitertransport abgelegt werden. Die Erfindung betrifft weiterhin ein Verarbeitungssystem mit einer Einrichtung zur Zusammenfassung und Umreifung von Druckereiprodukten sowie mit einer solchen Palettiervorrichtung.

Aus dem Stand der Technik, z.B. EP-A 0 310 998, US 4,419,035 oder EP-A 1 378 472, sind verschiedene automatische Palettiervorrichtungen zum Abstapeln von Stangen oder sonstigen Einheiten von Druckereiprodukten bekannt. Diese Einheiten werden in der Regel aus einer Zwischenablage übernommen, die sich am Ausgang eines Stangenauslegers oder sonstigen Einrichtung zum Zusammenfassen der Produkte befindet. Gemäss EP-A 1 378 472 werden die Stangen direkt aus der Position übernommen, in der die Stange gebildet wird, d.h. ohne ein vorheriges Verschieben der Stange quer zu ihrer Längsrichtung. Zum Transport zu einer Palettierposition, in der sich eine Palette befindet, wird ein Greifsystem mit zwei oder mehr Halteelementen, z.B. eine Zange, verwendet. Dieses Greifsystem ist aus Stabilitätsgründen an einem stationären Gestell gelagert, das nach Art eines Portals bzw. einer Brücke ausgeführt ist,. Es umfasst bei allen bekannten Vorrichtungen zwei parallele horizontale Laufschienen, die durch vier Tragsäulen etwa mannshoch vom Boden beabstandet sind und zwischen denen ein in Querträger in Schienenrichtung verfahrbar angeordnet ist. Am Querträger befindet sich das eigentliche Greifsystem, das relativ zum Querträger höhenverstellbar ist.

Nachteilig bei den bekannten Einrichtungen ist, dass der Zugang zum Stangenausleger bzw. der entsprechend eingesetzten Einrichtung zum Zusammenfassen der Einheiten durch die Palettiervorrichtung blockiert wird. Denn das Gestell hat zum Verfahren der ergriffenen Einheit notwendigerweise eine Breite, die deutlich grösser ist als eine typische Stangenlänge von ca. 1m bis 1,50 m, sowie eine Länge, die deutlich grösser als eine Palettenbreite ist. Die Zwischenablage oder die Auflage, auf der die Stangen oder sonstigen Einheiten gebildet werden, ist daher z.B. für Reparatur- und Wartungszwecke nur erschwert zugänglich, und es ergibt sich gleichzeitig ein sehr grosser Raumbedarf seitlich und auch nach oben hin. Dadurch können die Paletten nur erschwert zu- und weggeführt werden.

Der Erfindung liegt daher die Aufgabe zugrunde, die genannten Nachteile zu beheben und eine Palettiervorrichtung sowie ein entsprechendes Verarbeitungssystem zur Verfügung zu stellen, welches eine bessere Zugänglichkeit des Stangenauslegers bzw. der zur Einheitenbildung eingesetzten Einrichtung sowie einen leichteren Zu- und Abtransport der unbeladenen und beladenen Paletten ermöglicht.

Die Aufgabe wird gelöst durch eine Palettiervorrichtung mit den Merkmalen von Anspruch 1 sowie ein Verarbeitungssystem mit den Merkmalen von Anspruch 10.

Die erfindungsgemässe Palettiervorrichtung dient zum Transport von Einheiten von durch Umreifung zusammengehaltenen Druckereiprodukten innerhalb einer Arbeitsgrundfläche von einer Zwischenablage zu einer Palettierposition. Sie umfasst eine Tragkonstruktion mit wenigstens einem vertikal und horizontal verfahrbaren Halteelement, das wenigstens eine Druckereiprodukte-Einheit aus der Zwischenablage zu entnehmen und zur Palettierposition zu transportieren imstande ist. Erfindungsgemäss ist die Tragkonstruktion in der Aufsicht von oben auf die Arbeitsgrundfläche höchstens innerhalb der Arbeitsgrundfläche und in einem ersten Seitenbereich ausserhalb der Arbeitsgrundfläche angeordnet, wobei wenigstens ein zweiter Seitenbereich der Arbeitsgrundfläche von der Tragkonstruktion frei ist. Die Tragkonstruktion der erfindungsgemässen Palettiervorrichtung befindet sich also nach Art eines Krans mit seitlichem Überhang oberhalb und/oder an einer Seite der Arbeitsgrundfläche. Durch diese einseitige Abstützung und Lagerung der Halteelemente wird ein unbehinderter Zugang zur der Arbeitsgrundfläche von der anderen Seite her ermöglicht. Dies hat Vorteile bei der Wartung sowie für den Zu-und Abtransport unbeladener und beladener Paletten sowie eines eventuell vorhandenen Speichers (Ablagetischs) für Zwischenböden.

Unter Arbeitsgrundfläche wird (in Aufsicht von oben) diejenige Grundfläche verstanden, innerhalb derer Produkte-Einheiten von den verfahrbaren Halteelementen ergriffen und bewegt werden können. Es handelt sich daher beispielsweise um die Fläche, die von den ergriffenen Produkte-Einheiten, dem bzw. den Halteelement(en) oder einem beweglichen Tragarm der Tragkonstruktion überstrichen wird. Die Zwischenablage ist wenigstens teilweise und die Palettierposition ganz innerhalb der Arbeitsgrundfläche angeordnet. Ausserdem können weitere mobile oder stationäre Elemente innerhalb der Arbeitsgrundfläche angeordnet sein, z.B. ein Wagen, auf dem sich flächiges Verpackungsmaterial befindet, das als Zwischenboden häufig zum Trennen der einzelnen Lagen aus Produkte-Einheiten auf der Palette verwendet wird. Die Zwischenablage kann sich ausserhalb der Einheitenbildungs-Vorrichtung befinden, wobei die Produkte-Einheiten dann vom Ort ihrer Herstellung zur Zwischenablage verschoben werden. Sie kann auch eine Auflagefläche innerhalb einer solchen Vorrichtung sein, wobei die Produkte-Einheiten in diesem Fall direkt vom Ort ihrer Herstellung übernommen werden.

Unter Seitenbereichen der Arbeitsgrundfläche werden derjenigen Bereiche verstanden, die in Aufsicht auf die Arbeitsgrundfläche an diese angrenzen. Gemäss der Erfindung gibt es zwei voneinander unterscheidbare Seitenbereiche, nämlich einen ersten Seitenbereich, in dem sich die Tragkonstruktion befindet bzw. gelagert oder verankert ist, und einen zweiten Seitenbereich, in dem bzw. oberhalb dessen sich kein Bestandteil der Tragkonstruktion und auch kein sonstiges stationäres Element, wie z.B. die zur Einheitenbildung verwendete Vorrichtung, befindet. Der zweite Seitenbereich hat vorzugsweise eine Breite, die wenigstens der Breite einer Palette quer zu ihrer Transportrichtung entspricht. Bevorzugt ist er noch breiter, um einen freien Zugang zur Zwischenablage oder sogar zur Vorrichtung zur Einheitenbildung (z.B. Stapelausleger) zu gewährleisten.

Im Gegensatz zum Stand der Technik wird vorliegend anstelle einer Portalkonstruktion mit an gegenüberliegenden Seiten der Arbeitsgrundfläche, insbesondere an deren vier Ecken, angeordneten Tragsäulen, die die Gewichtskraft der Tragkonstruktion und der aufgenommenen Produkte-Einheiten symmetrisch aufnehmen, eine einseitige Tragkonstruktion mit einem oder mehreren ausladenden Tragelementen vorgeschlagen. Diese ist imstande, die Produkte-Einheiten innerhalb der Arbeitsgrundfläche aufzunehmen und zu bewegen. Dennoch bleibt die Arbeitsgrundfläche von der anderen Seite zumindest bereichweise ohne Höhenbeschränkung zugänglich. Die in Bezug auf die Arbeitsgrundfläche asymmetrische Anordnung der Tragkonstruktion führen zu asymmetrischen Kräften. Die entstehenden Drehmomente können durch eine geeignete Gestaltung der Tragkonstruktion, z.B. durch bodennahe Querträger, und/oder durch deren Verankerung im Boden und/oder an der Vorrichtung zur Einheitenbildung aufgenommen werden.

Indem die Tragkonstruktion nur in einem der Seitenbereiche der Arbeitsgrundfläche angeordnet ist und der andere Seitenbereich frei bleibt, ist die Arbeitsgrundfläche bzw. der Stangenausleger selbst z.B. für Reparatur- und Wartungszwecke besser, insbesondere ohne Höhenbeschränkung und ohne bodennahe Elemente, zugänglich. Ausserdem kann die beladene Palette auf einfache Weise und mit mehr Spielraum wegtransportiert werden, ohne dass Teile der Tragkonstruktion den Transportweg blockieren oder behindern. Auch bei einer bodennahen Tragkonstruktion ist es möglich, die leeren Paletten, die eine geringe Höhe haben, im ersten Seitenbereich unterhalb der dazu bereichsweise vom Boden beabstandeten Tragkonstruktion in einer Paletten-Förderrichtung zuzuführen und die beladenen Paletten über den zweiten Seitenbereich in derselben Richtung wegzuführen. Vorzugsweise hat die Tragkonstruktion dazu Durchgänge mit einer lichten Höhe, die an die Höhe leerer Paletten einschliesslich der Höhe einer Paletten-Fördereinrichutng angepasst ist. Die Erfindung ermöglicht es, voluminöse Über-Kopf-Konstruktionen zu vermeiden; falls aus Gründen der Statik ausladende Trag-/Stützelemente eingesetzt werden, sind diese bevorzugt in Bodennähe angeordnet.

Vorzugsweise umfasst die Tragkonstruktion wenigstens eine vertikal orientierte Tragsäule und wenigstens einen daran ausladend angeordneten Tragarm, wobei das wenigstens eine Halteelement am Tragarm angeordnet ist. Das wenigstens eine Halteelement ist oberhalb der Arbeitsgrundfläche positionierbar, z.B. indem der wenigstens eine Tragarm beweglich ist und/oder das Halteelement relativ zur Tragkonstruktion bewegt wird. Es ist bevorzugt, aber nicht notwendig, dass sich die gesamte Tragkonstruktion mit Ausnahme des wenigstens einen Tragarms seitlich ausserhalb der Arbeitsgrundfläche befindet. Die üblicherweise vertikale Tragsäule hat vorzugsweise eine Höhe, die grösser ist als die effektive Palettierhöhe (Gesamthöhe der Palette plus Lagen aus Produkte-Einheiten plus etwaige Paletten-Transportvorrichtung).

Besonders bevorzugt umfasst die Palettiervorrichtung ein Zwischenboden-Entnahmeelement, das an der Tragkonstruktion angeordnet und im wesentlichen synchron mit dem wenigstens einen Halteelement verfahrbar ist. Es dient dazu, einen flexiblen Zwischenboden oder ein sonstiges Trennelement, insbesondere eine Papierbahn, eine Kartonbahn oder eine Folie, aus einem Zwischenbodenspeicher, z.B. einem Wagen, zu entnehmen und beim oder vor dem Ablegen der Druckereiprodukte-Einheit unterhalb derselben zu positionieren. Derartige Zwischenböden werden dann eingelegt, wenn eine Lage aus mehreren Stangen auf der Palette fertig erstellt wurde, um die verschiedenen Lagen voneinander zu trennen. Zwischen der Palette und der ersten Lage kann ebenfalls ein solcher Zwischenboden angeordnet sein. Das Zwischenboden-Entnahmeelement ist beispielsweise ein am Halteelement angeordnetes Saug- oder Greifelement, das auf geeignete Weise gesteuert wird, insbesondere mit derselben Steuervorrichtung wie die Halteelemente.

Die Halteelemente können Greifer sein, die beispielsweise eine Stange vorzugsweise in ihrer Längsrichtung in klemmender Weise zwischen sich aufnehmen. Zum Erfassen und Transportieren kleinerer Einheiten, z.B. Stapel aus aufeinander liegenden Produkten, können auch Halteelemente in Form von Schaufeln oder Gabeln eingesetzt werden, die die Produkte-Einheiten von unten abstützen. Vorzugsweise sind zwei in variablem Abstand voneinander angeordnete, miteinander kooperierende Halteelemente vorhanden, die eine Druckereiprodukte-Einheit, insbesondere eine Stange, in klemmender Weise zwischen sich aufzunehmen imstande sind.

Das erfindungsgemässe Verarbeitungssystem umfasst eine Einrichtung zur Bildung von umreiften Einheiten von Druckereiprodukten, z.B. einen Stangenausleger, an deren Ausgang sich eine Zwischenablage und eine Palettierposition befindet, sowie die bereits beschriebene Palettiervorrichtung, die die Druckereiprodukte-Einheiten von der Zwischenablage zu übernehmen imstande ist. Bevorzugt umfasst das Verarbeitungssystem eine Fördervorrichtung für die Paletten, z.B. einen Rollenteppich. Die Förderstrecke der Paletten-Fördervorrichtung ist vorzugsweise gerade und verläuft besonders bevorzugt im wesentlichen senkrecht zur Transportrichtung der Druckereiprodukte-Einheiten innerhalb der Arbeitsgrundfläche, d.h. parallel zur Einheitenbildungs-Einrichtung, was eine verhältnismässig platzsparende Anordnung ermöglicht. Eine weitere bevorzugte Ausführungsform sieht vor, dass die leeren Paletten senkrecht zur Transportrichtung der Druckereiprodukte-Einheiten zugeführt und nach dem Beladen parallel dazu wegtransportiert werden. Ein Beispiel für eine Einheitenbildungs-Einrichtung in Form eines Stangenauslegers ist in der WO 2004/009448 beschrieben.

Das Verarbeitungssystem wird vorzugsweise durch eine gemeinsame Steuereinrichtung, z.B. ein Logistikmodul, gesteuert, welche durch geeignete Software realisiert sein kann. Hierzu werden zwischen der Steuereinrichtung und verschiedenen geeigneten Sensoren und den beteiligten Systemkomponenten Zustandsinformationen bzw. Steuersignale ausgetauscht. Die Steuereinrichtung überwacht beispielsweise durch geeignete Sensoren (Kamera, Gewichtssensor) den Ablageplatz auf der Zwischenablage und sorgt spätestens bei Erreichen von dessen Maximalkapazität für den Weitertransport der Produkteeinheiten (z.B. Stapel) zu der Palette durch die Palettiervorrichtung bzw. für eine Unterbrechung der Einheitenbildung (Stapelbildung). Die Steuereinrichtung überwacht des weiteren den Beladezustand der Palette, z.B. ebenfalls durch eine Kamera, und steuert die Bewegungen der Palettiervorrichtung so, dass eine neue Produkteinheit an geeignete Stelle auf der Palette abgelegt wird. Falls eine Lage vollständig ist, veranlasst die Steuereinrichtung, dass ein Zwischenboden aus dem Speicher entnommen und auf der abgeschlossenen Lage angeordnet wird; dies erfolgt vorzugsweise im wesentlichen gleichzeitig mit dem Ergreifen und Ablegen der ersten Produkteeinheit einer neuen Lage. Schliesslich wird der Beladezustand der Palette überwacht und bei Erreichen von ihrer Maximalkapazität ihr Wegtransport sowie die Zufuhr einer leeren Palette veranlasst. Die Steuerung kann auch in eine übergeordnete Logistiksteuerung eingebunden sein, welche z.B. die Verwaltung und Bewegung leerer und beladener Paletten, den Nachschub an Zwischenböden durch Austausch oder Auffüllen des entsprechenden Speichers und die Steuerung der nachgeordneten Prozesse, wie z.B. Weiterverarbeitung, Kommissionieren, Versand der Produkteeinheiten, veranlasst. Einzelne oder alle Teilprozesse, z.B. Ergreifen einer Produkteeinheit durch die Palettiervorrichtung, Austausch einer vollen gegen eine leere Palette, können je nach den Anforderungen auch durch eine Bedienperson manuell ausgelöst oder ganz gesteuert werden. Hierüber wird die übergeordnete Logistiksteuerung, sofern vorhanden, vorzugsweise durch Austausch geeigneter Steuersignale informiert, so dass die übrigen Prozesse hieran angepasst werden können.

Beispiele der Erfindung sind in den Zeichnungen dargestellt und nachfolgend beschrieben. Es zeigen rein schematisch:
- Fig. 1: eine Gesamtansicht eines erfindungsgemässen Verarbeitungssystems;
- Fig. 2: eine erfindungsgemässe Palettiervorrichtung;
- Fig. 3-5: verschiedene Ansichten der Palettiervorrichtung aus Fig. 2 mit einer beladenen Palette in der Palettierposition;
- Fig. 6: die Palettiervorrichtung aus Fig. 2 mit einer Fördereinrichtung für Paletten.

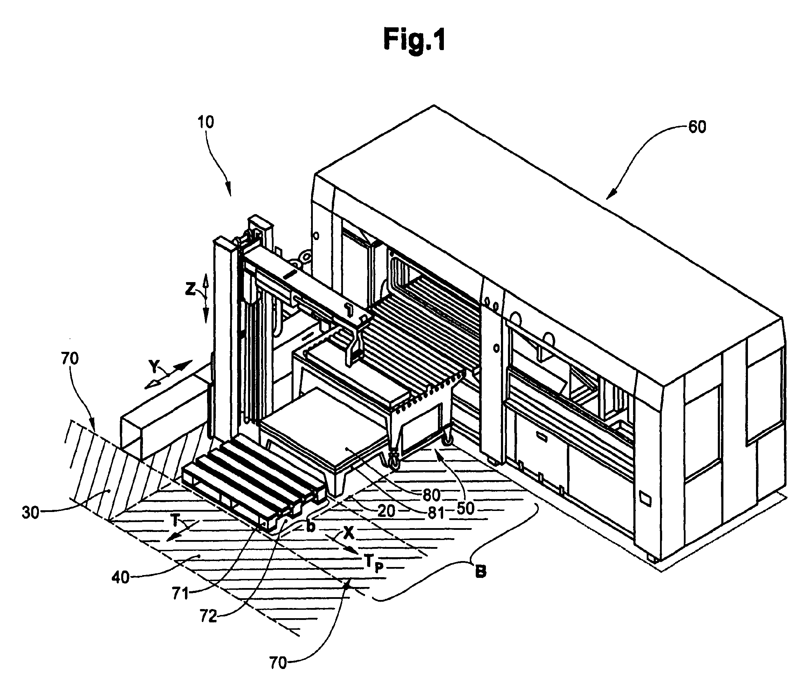

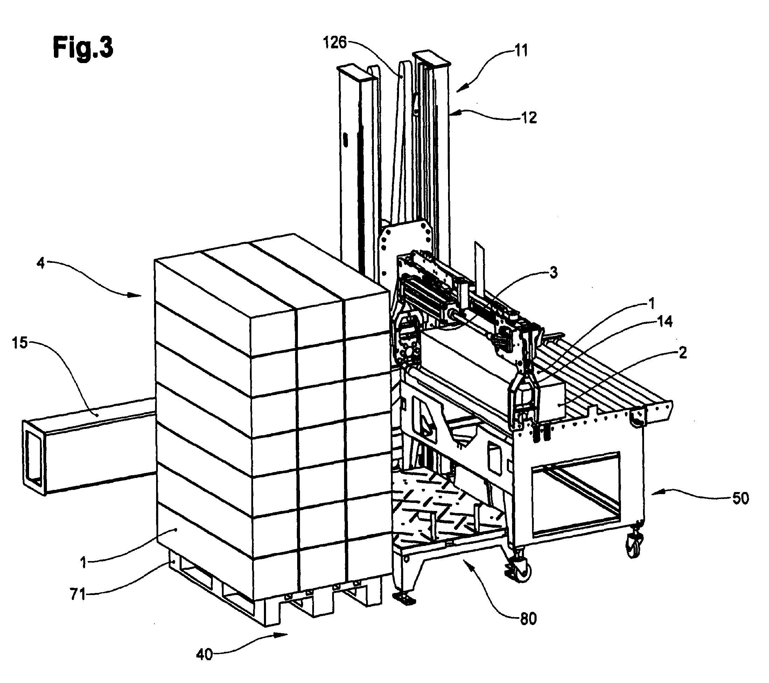

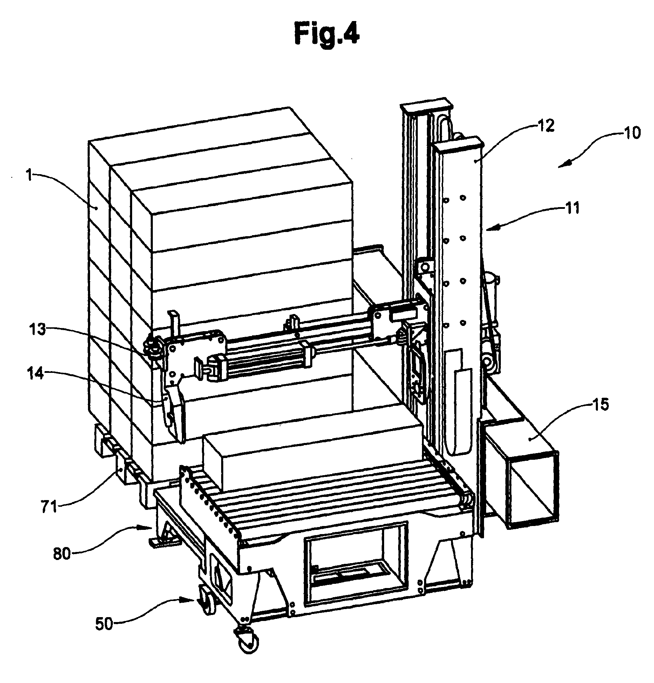

Fig. 1 zeigt eine Gesamtansicht eines erfindungsgemässen Verarbeitungssystems, welches als Hauptkomponenten eine Palettiervorrichtung 10, eine Einheitenbildungs-Einrichtung 60, hier einen Stangenausleger, eine an dessen Ausgang angeordnete Zwischenablage 50 und eine Paletten-Fördereinrichtung 70 umfasst. Die Produkte werden dem Stangenausleger 60 einzeln zugeführt und dort zu einer hier nicht dargestellten Produkte-Einheit in Form einer Stange 1 (siehe Fig. 3-6) zusammengefasst. Diese verlässt den Stangenausleger 60 in einer quer zu ihrer Längsrichtung verlaufenden Transportrichtung T und gelangt auf die Zwischenablage 50, hier in Form eines Wagens mit einem vorzugsweise leicht abschüssigen Rollenteppich als Auflagefläche. Die Palettiervorrichtung 10 hat die Aufgabe, die Stangen 1 weiter in Transportrichtung T zu einer Palette 71 zu transportieren und darauf in Lagen 4 abzulegen. Die Palette 71 befindet sich dazu auf der Paletten-Fördereinrichtung 70 an einer Palettierposition 72. Die Paletten-Fördereinrichtung 70 fördert die Paletten 71 in einer Paletten-Transportrichtung T_{P}, die hier senkrecht zur Stangen-Transportrichtung T verläuft.

In Aufsicht von oben spannen die Palette 71 bzw. ihr Umriss und die Zwischenablage 50 eine ungefähr rechteckige Arbeitsgrundfläche 20 auf, innerhalb derer die Einheiten 1 durch die Palettiervorrichtung 10 bewegt werden können. In Transportrichtung T zwischen der Palette 71 bzw. der Palettierposition 72 und der Zwischenablage 50 befindet sich innerhalb der Arbeitsgrundfläche 20 ein Zwischenspeicher 80 für Zwischenböden. Die Zwischenablage 50 könnte sich auch innerhalb des Stangenauslegers 60 befinden. In Transportrichtung T gesehen links und rechts von der Arbeitsgrundfläche 20 befindet sich ein erster bzw. ein zweiter Seitenbereich 30, 40. Im ersten Seitenbereich 30 befindet sich die Tragkonstruktion 11, während der zweite Seitenbereich mit Ausnahme der Paletten-Fördereinrichtung 70 auch nach oben hin frei ist.

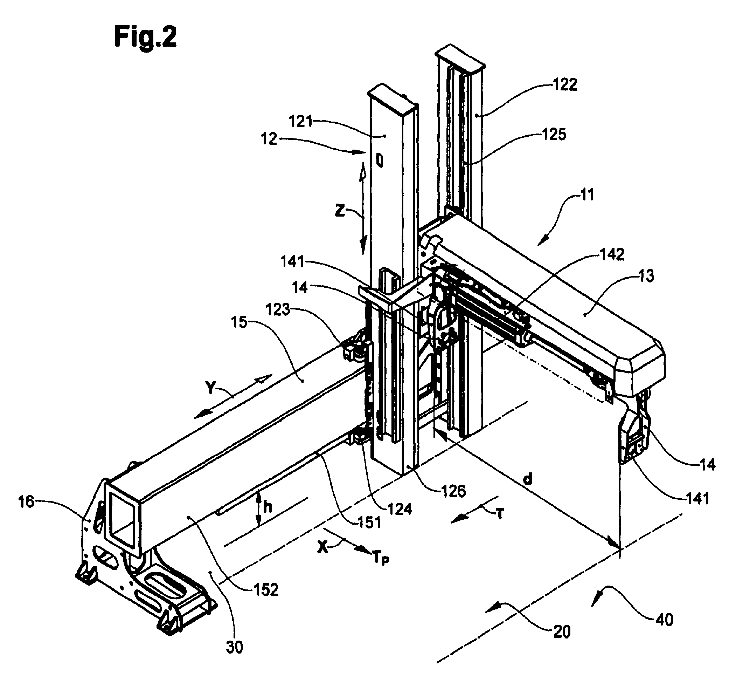

Die Palettiervorrichtung 10 wird mit Bezug auf Fig. 2-6, die verschiedene Ansichten der Palettiervorrichtung 10 zeigen, näher erläutert. Die Palettiervorrichtung 10 umfasst eine Tragkonstruktion 11, die hier eine vertikale Tragsäule 12 mit zwei parallelen Seitenteilen 121, 122 aufweist. Diese ist an einem an einem horizontal orientierten Träger 15 in horizontaler (y-)Richtung verschiebbar gelagert. Die Ausrichtung des Trägers 15 (y-Richtung) entspricht der Transportrichtung T der Stangen 1. Hierzu weist der Träger 15 beispielsweise eine oder mehrere Führungsschienen 151 auf, die mit Führungselementen 123, 124 an der Tragsäule 12 zusammenwirken. Der Träger 15 ist durch Stützelemente 16 so erhöht gelagert, dass seine dem Boden zugewandte Unterseite 152 vom Boden einen Abstand h aufweist. Die Stützelemente 16 können im Boden verankert sein. Sie können quer zur Achse des Trägers 15 langgestreckt sein, um die Stabilität zu erhöhen. Der Träger 15 hat ein Hohlprofil mit beispielsweise rechteckförmigem Querschnitt und ist möglichst verwindungssteif.

An der Tragsäule 12 ist ein seitlich abstehender Haltearm 13 höhenverstellbar gelagert (z-Richtung). Zur möglichst verkippungsfreien Vertikalbewegung des Haltearms 13 dienen zwei Paare von vertikal verlaufenden Führungsschienen 125, in denen der Haltearm 13 läuft. Er wird mittels eines geeigneten Antriebs bewegt, wobei die Kraftübertragung beispielsweise über Riemen 126 (siehe Fig. 3) erfolgt. Der Haltearm 13 hat eine Länge, die im wesentlichen einer typischen Stangenlänge entspricht. Er trägt an seinen beiden Enden jeweils ein Halteelement 14 mit einander zugewandten, im wesentlichen ebenen Halteflächen 141. Der Abstand d der Halteelemente 14 ist z.B. durch Bewegung eines der Halteelemente 14 mittels eines Hydraulik-/Pneumatikzylinders oder eines Motors (z.B. Linearmotor, Elektromotor) 142 einstellbar, so dass eine Stange 1 nach Art einer Zange gegriffen werden kann.

Die Arbeitsgrundfläche 20 der Palettiervorrichtung 10 ist hier durch den Bereich definiert, den der Tragarm 13 bzw. die Halteelemente 14 bei Bewegung der Tragsäule in y-Richtung überstreicht/überstreichen. Die Zwischenablage 50 und die Palette 71 werden so relativ zur Palettiervorrichtung 10 angeordnet, dass sie sich innerhalb der Arbeitsgrundfläche 20 befinden. Innerhalb der Arbeitsgrundfläche 20 werden die Produkte-Einheiten im vorliegenden Beispiel nur in y- und z-Richtung verfahren; bei entsprechender Gestaltung des Haltesystems ist jedoch auch eine horizontale Bewegung senkrecht zur Transportrichtung T (x-Richtung) und/oder Drehung möglich, z.B. um die Stangen 1 vor dem Ablegen zu drehen und in Lagen mit unterschiedlicher Ausrichtung abzulegen.

Erfindungsgemäss ist die Tragkonstruktion 11 im ersten Seitenbereich 30 hier links von der Arbeitsgrundfläche 20 angeordnet. Nur der Tragarm 13 befindet sich oberhalb der Arbeitsgrundfläche 20. Im und oberhalb des zweiten Seitenbereichs 40, der hier in Bezug auf die Transportrichtung T (y-Richtung) gegenüber vom ersten Seitenbereich 30 liegt, befinden sich keine Elemente der Tragkonstruktion 11. Damit ist die Arbeitsgrundfläche 20 wenigstens über den zweiten Seitenbereich 40 ohne Höhenbeschränkung oder bodennahe Elemente frei zugänglich. Der zweite Seitenbereich 40 hat eine Breite B, die grösser ist als die Breite b einer Palette 71; hier ist die Breite B grösser als die kombinierten Breiten der Palette 71, des Wagens 80 und der Zwischenablage 50. Der Träger 15 ist parallel zu einer Seitenkante der Arbeitsgrundfläche oder parallel zur Transportrichtung T der Produkte-Einheiten 1 von der Zwischenablage 50 zur Palettierposition 72 angeordnet.

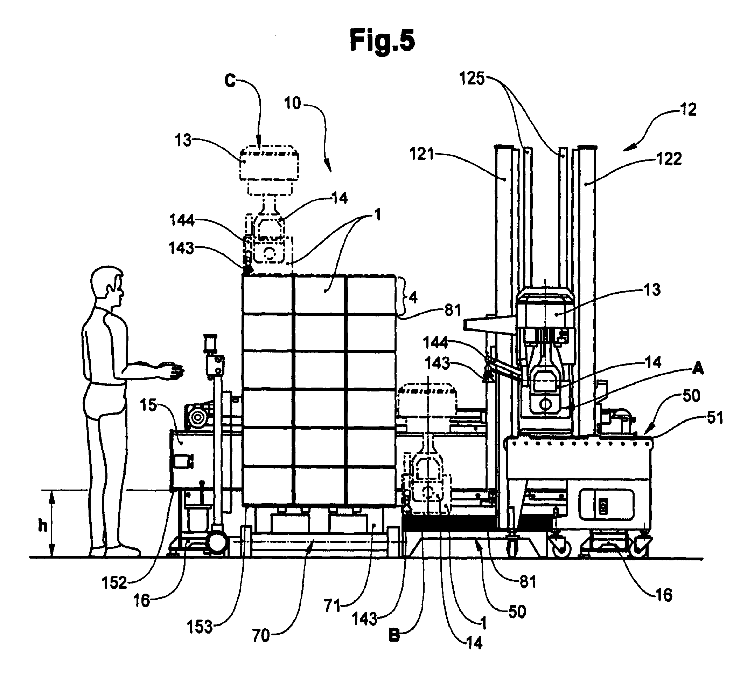

Im Folgenden wird die Funktionsweise der Vorrichtung erläutert: Fig. 2 zeigt die Palettiervorrichtung 10 mit der Tragsäule 12 in ihrer dem Stapelausleger 60 zugewandten vorderen Endposition entlang des horizontalen Trägers 15. Der Tragarm 13 ist auf eine Höhe abgesenkt, die etwa der Höhe der Zwischenablage 50 entspricht. Dies ist auch in Fig. 5 in der mit "A" bezeichneten Position des Tragarms 13 oberhalb der Zwischenablage 50 gezeigt. Die Halteelemente 14 werden zum Aufnehmen der Stange 1 von aussen an die beiden axialen Endbereiche 2, 3 einer Stange 1 angenähert, und die Stange 1 wird durch Verringern des Abstands d der Halteelemente 14 klemmend zwischen diesen aufgenommen. Der Haltearm 13 wird daraufhin von der Zwischenablage 50 wegbewegt, z.B. durch Bewegung in z-Richtung und/oder in y-Richtung. Durch Verfahren der Tragsäule 12 entlang des Trägers 15 wird der Stapel 1 zur Palettierposition 72 bewegt (Position "C" in Fig. 5). Die Höhe wird dabei durch Verfahren des Tragarms 13 entlang der Tragsäule 12 an die momentane Ladehöhe auf der Palette 71 angepasst, und die Stange 1 wird an geeigneter Position auf der Palette bzw. auf darauf bereits abgelegten Stangen abgelegt. Die Tragsäule 12 wird anschliessend wieder zur Zwischenablage 50 verfahren.

Es ist aus Stabilitätsgründen von Vorteil, wenn einzelne Lagen 4 von Stangen 1 durch Zwischenböden 81, z.B. aus einem flexiblen Bahnmaterial, voneinander getrennt werden. Diese Zwischenböden 81 liegen als Stapel auf dem Zwischenboden-Speicher 80 auf, der hier als Wagen ausgebildet ist. Zur Entnahme und zum Transport der Zwischenböden 81 weist die Tragkonstruktion 11 wenigstens ein Zwischenboden-Entnahmeelement 143 auf, z.B. einen Greifer oder ein Saugelement. Dieses dient dazu, den Zwischenboden 81 vom Stapel abzuziehen und beim oder vor dem Ablegen der Druckereiprodukte-Einheit unterhalb derselben zu positionieren. Indem das Entnahmeelement 143 synchron mit den Halteelementen 14 bewegt wird, werden zusätzliche Hin- und Her-Bewegungen zum Einfügen der Zwischenböden 81 vermieden.

Wie Fig. 5 zeigt, ist das Zwischenboden-Entnahmeelement 143 am Tragarm 13 angeordnet und wird daher durch Bewegung des Tragarms in y- und z-Richtung synchron zu den Halteelementen 14 bewegt. Das Zwischenboden-Entnahmeelement 143 ist über einen Hebel 144, hier einen Doppelhebel, um eine zum Tragarm parallele Achse mit schwenkbar mit dem Tragarm verbunden. Im Ruhezustand, d.h. wenn es nicht gebraucht wird, ist es in eine seitliche Lage geschwenkt, so dass sich seine aktive Fläche, hier die Öffnungen der zum Aufnehmen der Zwischenböden verwendeten Saugelemente, oberhalb der durch die Halteelemente 14 definierten Ebene befindet. Dies ist in Fig. 5 in der mit "A" bezeichneten Position des Tragarms 13 oberhalb der Zwischenablage 50 gezeigt. Zum Aufnehmen eines Zwischenbodens 81 wird der Hebel 144 in eine weitgehend senkrechte Orientierung geschwenkt. Dies ist in Fig. 5 in der mit "B" bezeichneten Position des Tragarms 13 unmittelbar oberhalb des Zwischenboden-Speichers 80 gezeigt. Die Halteelemente 14 haben zu diesem Zeitpunkt bereits eine Stange 1 aufgenommen. Der Zwischenboden 81 wird durch gesteuerte Saugluftzufuhr aufgenommen. Zwischenboden 81 und Stange 1 werden anschliessend durch Bewegung des Tragarms 13 in y- und z-Richtung in die Abgabeposition "C" oberhalb der Palette bzw. der darauf bereits abgelegten Stangen 1 bewegt. Der Zwischenboden 81 wird auf eine vollständige Lage 4 gelegt; gleichzeitig wird die erste Stange 1 der neuen Lage abgelegt. Falls kein Zwischenboden 81 eingefügt werden soll, wird die Position "B" nicht vom Tragarm 13 angefahren.

Wie Fig. 5 zeigt, kann der Speicher 80 für Zwischenböden 81, z.B. ein Rollwagen/- tisch, in der Aufsicht von oben auch teilweise unterhalb der Ablagefläche 51 der Zwischenablage 50 angeordnet sein. Die Zwischenboden-Entnahmeelemente 143 müssen lediglich auf das in Transportrichtung T vordere Ende der Zwischenböden 81 zugreifen können. Hierdurch wird eine platzsparende Anordnung realisiert.

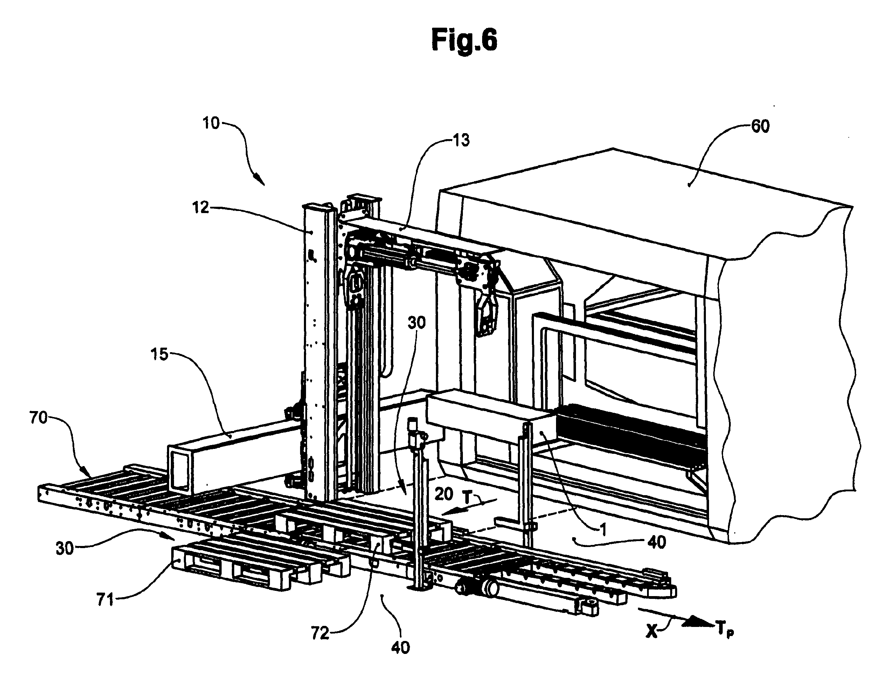

Wenn die Palette 71 voll beladen ist, wird sie in Paletten-Transportrichtung T_{P} abtransportiert. Die Paletten-Transportrichtung T_{P} verläuft in x-Richtung, also senkrecht zur Stangen-Transportrichtung T. Die dazu verwendete Paletten-Fördereinrichtung 70 ist, wie in Fig. 6 gezeigt, beispielsweise ein Rollenteppich. Dieser ist parallel zur Längsrichtung (Stangenbildungsrichtung) des Stangenanlegers 60 orientiert. Da in Transportrichtung T_{P} der beladenen Palette 71, nämlich durch den zweiten Seitenbereich 40 hindurch, keine Bestandteile der Tragkonstruktion 11 angeordnet sind, kann die beladene Palette 71 ohne mechanische Behinderung durch etwaige Trag-/Stützteile abtransportiert werden. Wie bereits beschrieben, ist die Unterseite 152 des Trägers 15 in einem Abstand h vom Boden angeordnet. Durch den so gebildeten Durchgang 153 kann eine leere Palette 71 auf der Fördereinrichtung 70 unter dem Träger 15 hindurch zur Palettierposition 72 gefördert werden. Der Durchgang hat dazu mindestens die Breite einer Palette 71 quer zu deren Förderrichtung T_{P} und eine Höhe h, die der Höhe der Fördereinrichtung 70 zuzüglich der Höhe der Palette 71 entspricht. Vorzugsweise ist die Unterseite 126 der Tragsäule 12 ebenfalls vom Boden beabstandet, wobei der Abstand wenigstens der Höhe der Fördereinrichtung 70 entspricht, so dass die Tragsäule 12 diese bei der Bewegung entlang des Trägers 15 überfahren kann. Die Bewegung der Palette 71 erfolgt stets in derselben Richtung Tp; es sind keine komplizierten Umlenkungen innerhalb des Paletten-Förderwegs notwendig.

Statt einer Zu- und Wegförderung der Paletten in Paletten-Transportrichtung T_{P} können die beladenen Paletten auch in Stangen-Transportrichtung T weggefördert werden. Da dann im zweiten Seitenbereich 40 auch bodennah keine Elemente angeordnet sind, ergibt sich eine nochmals verbesserte Zugänglichkeit der Zwischenablage 50 bzw. der Stangenbildungsvorrichtung 60.

Eine hier nicht dargestellte Steuereinrichtung überwacht durch geeignete Sensoren den Status der verschiedenen Systemkomponenten und steuert deren Bewegungen.

Sie sorgt insbesondere dafür, dass die Stangen an passender Stelle abgelegt werden, die leeren bzw. beladenen Paletten zu- bzw. weggeführt werden, die Zwischenböden ergriffen und eingelegt werde. Die Steuerung dieser und anderer Teilprozesse kann auch manuell durch eine Bedienperson erfolgen. Die Steuereinrichtung kann Teil eines zentralen Steuersystems sein, z.B. einer zentralen Logistiksteuerung.

Folgende Abwandlungen der dargestellten Vorrichtung können beispielsweise ebenfalls eingesetzt werden:

Anstatt den Tragarm 13 in z-Richtung zu bewegen, können die Halteelemente 14 relativ zu diesem höhenverstellbar sein. Sie können beispielsweise auch um eine vertikale Achse drehbar sein, um die Stange als Ganzes zu drehen, z.B. zum Ablegen auf der Palette in unterschiedlicher Orientierung. Ebenso können die Halteelemente 14 um eine in x-Richtung verlaufende Achse drehbar oder schwenkbar sein.

Die Halteelemente 14 können auch nach Art einer Schaufel mit einer horizontalen Auflagefläche ausgeführt sein. Mit derartigen Halteelementen können beispielsweise kleinere Einheiten, z.B. Stapel aus liegenden Produkten, untergriffen und von unten abgestützt werden.

Alternativ zum linearen Verfahren der Tragsäule 12 entlang des Trägers 15 kann diese auch stationär sein. Zum Transport der Produkte-Einheiten innerhalb der Arbeitsgrundfläche wird die Tragsäule 12 selbst oder ein daran angebrachter Haltearm beispielsweise um die Achse der Tragsäule 12 gedreht oder geschwenkt.

Die Tragsäule 12 muss nicht senkrecht nach oben ragen, sondern kann auch schräg gestellt sein oder einen geknickten Verlauf haben.

Statt einzelner Halteelemente an einem Tragarm kann auch ein einseitig auf die Arbeitsgrundfläche zugreifender Roboter vorhanden sein, der die Produkteeinheiten ergreifen, von der Zwischenablage zum Stapel bewegen und sie dort in geeigneter Weise ablegen kann.

Statt einer einzigen Tragsäule kann auch eine Tragkonstruktion mit mehreren Tragsäulen verwendet werden. Diese bildet beispielsweise wie beim Stand der Technik ein portalartiges Traggestell mit einer Querverbindung, entlang derer die Halteelemente bzw. ein ausladender Tragarm verschoben werden. Im Gegensatz zum Stand der Technik befindet sich die Grundfläche der hier verwendeten Tragkonstruktion für das wenigstens eine Halteelement jedoch seitlich von der Zwischenablage, die damit von der anderen Seite her zugänglich ist. Der Grundriss der Tragkonstruktion befindet sich vorzugsweise nur in einem Seitenbereich der Arbeitsgrundfläche, oberhalb des anderen Seitenbereichs befinden sich keine Komponenten der Tragkonstruktion.

Prinzipiell kann nicht nur der bewegliche Tragarm, sondern das Traggestell an sich seitlich ausladend gestaltet sein; in diesem Fall können Teile davon oberhalb der Arbeitsgrundfläche angeordnet sein. Oberhalb eines seitlichen Bereichs neben der Arbeitsgrundfläche befinden sich jedoch keine Teile des Traggestells, so dass hier ohne Höhenbeschränkung operiert werden kann.

## Patentansprüche

1. Palettiervorrichtung (10) zum Transport von Einheiten (1) von Druckereiprodukten, die durch Umreifung zusammengehalten sind, insbesondere von aus stehend aneinandergereihten Druckereiprodukten gebildeten Stangen oder Paketen aus liegend aufeinandergelegten Druckereiprodukten, innerhalb einer Arbeitsgrundfläche (20) von einer Zwischenablage (50) zu einer Palettierposition (72), wobei die Palettiervorrichtung (10) eine Tragkonstruktion (11) mit wenigstens einem vertikal und horizontal verfahrbaren Halteelement (14) umfasst, das wenigstens eine Druckereiprodukte-Einheit (1) aus der Zwischenablage (50) zu entnehmen und zur Palettierposition (72) zu transportieren imstande ist, **dadurch gekennzeichnet, dass** die Tragkonstruktion (11) in der Aufsicht von oben auf die Arbeitsgrundfläche (20) im wesentlichen innerhalb der Arbeitsgrundfläche (20) und/oder in einem ersten Seitenbereich (30) ausserhalb der Arbeitsgrundfläche (20) angeordnet ist, wobei wenigstens ein zweiter Seitenbereich (40) der Arbeitsgrundfläche (20) von der Tragkonstruktion (11) frei ist.

2. Palettiervorrichtung (10) nach Anspruch 1, **dadurch gekennzeichnet, dass** die Tragkonstruktion im ersten Seitenbereich wenigstens bereichsweise derart vom Boden beabstandet ist, dass eine Palette (71) durch den ersten Seitenbereich hindurch zur Arbeitsgrundfläche (20) führbar ist.

3. Palettiervorrichtung (10) nach Anspruch 1 oder 2, **dadurch gekennzeichnet, dass** der zweite Seitenbereich (40) eine Breite (b) hat, die grösser ist als die Breite einer Palette (71).

4. Palettiervorrichtung (10) nach einem der Ansprüche 1 bis 3, **dadurch gekennzeichnet, dass** die Tragkonstruktion (11) wenigstens eine vertikal orientierte Tragsäule (12) und wenigstens einen daran ausladend angeordneten Tragarm (13) aufweist, wobei das wenigstens eine Halteelement (14) am Tragarm (13) angeordnet ist.

5. Palettiervorrichtung (10) nach Anspruch 4, **dadurch gekennzeichnet, dass** die Tragkonstruktion (11) einen in Bodennähe angeordneten horizontalen Träger aufweist, der zumindest bereichsweise derart vom Boden beabstandet ist, dass eine Palette (71) unter dem Träger hindurch führbar ist, wobei vorzugsweise die Tragsäule (12) an dem horizontalen Träger (15) in horizontaler Richtung verfahrbar gelagert ist.

6. Palettiervorrichtung (10) nach Anspruch 4 oder 5, **dadurch gekennzeichnet, dass** eine Paletten-Fördereinrichtung (70), insbesondere ein Rollenteppich, vorhanden ist, die durch den ersten Seitenbereich (30) und unter dem Träger (15) hindurch zur Arbeitsgrundfläche (20) führt.

7. Palettiervorrichtung (10) nach einem der Ansprüche 3 bis 6, **dadurch gekennzeichnet, dass** der Tragarm (13) relativ zur Tragsäule (13) beweglich, insbesondere höhenverstellbar und/oder um die Achse der Tragsäule (12) verschwenkbar ist.

8. Palettiervorrichtung (10) nach einem der Ansprüche 3 bis 7, **dadurch gekennzeichnet, dass** das wenigstens eine Halteelement (14) in Längsrichtung des Tragarms (13) verfahrbar ist und vorzugsweise um eine parallel zum Tragarm (13) verlaufende Achse schwenkbar ist.

9. Palettiervorrichtung (10) nach einem der vorangegangenen Ansprüche, **gekennzeichnet durch** wenigstens ein Zwischenboden-Entnahmeelement (143), das an der Tragkonstruktion (11) angeordnet ist, im wesentlichen synchron mit dem wenigstens einen Halteelement (14) verfahrbar ist und das imstande ist, einen flexiblen Zwischenboden (81), insbesondere eine Papierbahn, aus einem Zwischenbodenspeicher (80) zu entnehmen und beim oder vor dem Ablegen der Druckereiprodukte-Einheit (1) unterhalb derselben zu positionieren.

10. Verarbeitungssystem, umfassend eine Einrichtung (60) zur Bildung von umreiften Einheiten (1) von Druckereiprodukten, an deren Ausgang sich eine Zwischenablage (50) und eine Palettierposition (72) befindet, sowie eine Palettiervorrichtung (10) nach einem der vorangegangenen Ansprüche, die die Druckereiprodukte-Einheiten (1) von der Zwischenablage (50) zu übernehmen und zur Palettierposition (72) zu fördern imstande ist.

11. Verarbeitungssystem nach Anspruch 10, **gekennzeichnet durch** eine Fördervorrichtung (70) für unbeladene bzw. beladene Paletten (71) mit einer vorzugsweise geraden Förderstrecke, die **durch** den ersten Seitenbereich (30), die Arbeitsgrundfläche (20) und den zweiten Seitenbereich (40) verläuft.

12. Verarbeitungssystem nach Anspruch 11, **dadurch gekennzeichnet, dass** die Tragkonstruktion (11) wenigstens eine vertikal orientierte Tragsäule (12) aufweist, die an einem vorzugsweise in Bodennähe horizontal angeordneten Träger (15) in horizontaler Richtung verfahrbar gelagert ist, wobei der Träger (15) zumindest bereichsweise vom Boden beabstandet ist und die Fördervorrichtung (70) unter dem Träger (15) durchgeführt ist.

13. Verarbeitungssystem nach Anspruch 12, **dadurch gekennzeichnet, dass** die Förderstrecke der Paletten-Fördervorrichtung (70) im wesentlichen senkrecht zur Transportrichtung (T) der Druckereiprodukte-Einheiten (1) innerhalb der Arbeitsgrundfläche (20) verläuft.

14. Verarbeitungssystem nach einem der Ansprüche 10 bis 13, **gekennzeichnet durch** eine Steuereinrichtung, welche die Palettiervorrichtung und/oder die Einrichtung (60) zur Bildung von umreiften Einheiten (1) von Druckereiprodukten und/oder eine gegebenenfalls vorhandene Paletten-Fördervorrichtung (70) und/oder gegebenenfalls vorhandene weitere Systemkomponenten in Abhängigkeit voneinander zu steuern imstande ist.

15. Verarbeitungssystem nach Anspruch 14, **dadurch gekennzeichnet, dass** die Steuereinrichtung Signale geeigneter Sensoren und/oder Zustandsinformationen der beteiligten Systemkomponenten auszuwerten und in Abhängigkeit davon Steuersignale zu erzeugen und an die beteiligten Systemkomponenten zu übermitteln imstande ist, welche den Zustand der beteiligten Systemkomponenten in Abhängigkeit voneinander beeinflussen.
